# EUROPEAN PATENT APPLICATION

(11) **EP 4 600 496 A1**
(43) Date of publication of application: **13.08.2025**
(21) Application number: 23876659.6
(22) Date of filing: 09.10.2023
(51) Int. Cl.: F04D 25/08, H02K 7/14, F21V 33/00

(54) **MOTOR STRUCTURE AND FAN LAMP**

(30) Priority: 09.10.2022 CN 202222645694 U
(71) Applicant: Suzhou Opple Lighting Co., Ltd., Suzhou, Jiangsu 215211 (CN); Opple Lighting Co,. Ltd., Shanghai 201201 (CN)
(72) Inventor: WANG, Yaohai, Suzhou, Jiangsu 215211 (CN); ZHANG, Guobao, Suzhou, Jiangsu 215211 (CN); WANG, Xiaolei, Suzhou, Jiangsu 215211 (CN)
(74) Representative: Winter, Brandl - Partnerschaft mbB
(86) International application number: PCT/CN2023/123597
(87) International publication number: WO 2024/078457

(57) **Abstract**

The present application relates to the technical field of illumination, and provides a motor structure and a fan lamp. The motor structure comprises a motor shaft, a motor housing, a driving assembly, and a motor driving circuit board. The motor housing is rotationally sleeved on the motor shaft, and a mounting cavity is formed in the motor housing. The driving assembly is sleeved on the motor shaft, is mounted in the mounting cavity, and is used for driving the motor housing to rotate along the motor shaft. The motor driving circuit board is sleeved on the motor shaft, is mounted in the mounting cavity, is electrically connected to the driving assembly, and is suited for being secured to the driving assembly via a fastener. The invention effectively utilizes the mounting space in the motor housing, reduces a component assembly count, avoids externally re-planning the mounting area of the motor driving circuit board, and improves aesthetics while reducing cost.

## Description

### CROSS-REFERENCE TO RELATED APPLICATION

The present application claims priority to Chinese Patent Application No. 2022226456947, filed October 9, 2022, entitled "Motor Structure and Fan Lamp", which is incorporated herein by reference in its entirety.

### TECHNICAL FIELD

The present application relates to the field of lighting technology, and in particular to a motor structure and a fan lamp.

### BACKGROUND

The fan lamp uses the motor to drive the fan blades to rotate and uses the light source for illumination. In current fan lamp products, the motor driving circuit board of the motor and the motor body are installed separately. There are mainly the following methods: 1. Install the motor driving circuit board on the hanging tube so that the drive circuit board is located above the motor body. This method takes up space for the fan lamp, and requires an additional shell to protect the motor driving circuit board to achieve anti-electric shock protection and the product beautiful. 2. Fix the motor driving circuit board in the control box outside the fan lamp. When installing the fan lamp, an additional wiring harness is required to connect the control box and the motor, and the wiring is more complicated.

### SUMMARY

The present application provides a motor structure to solve the problem in the prior art that separate installation of the motor driving circuit board and the motor body occupies space for the fan lamp and causes complicated wiring, so as to install the motor driving circuit board in the housing of the motor, effectively utilize space, reduce the number of parts and assembly times, and reduce costs.

The present application also provides a fan lamp.

The present application provides a motor structure, including:
a motor shaft;
a motor housing, rotatably sleeved on the motor shaft, and a mounting cavity being formed in the motor housing;
a driving assembly, sleeved on the motor shaft and installed in the mounting cavity for driving the motor housing to rotate along the motor shaft;
a motor driving circuit board, sleeved on the motor shaft and installed in the mounting cavity, wherein the motor driving circuit board is electrically connected to the driving assembly, and the motor driving circuit board is adapted to be fixed to the driving assembly through a fastening mechanism.

According to the motor structure provided by the present application, and the driving assembly includes:
a motor stator, sleeved on the motor shaft and installed in the mounting cavity, the motor stator being electrically connected to the motor driving circuit board, and the motor driving circuit board being adapted to be fixed to the motor stator through the fastening mechanism;
a motor rotor, rotatably sleeved on an outside of the motor stator and installed in the mounting cavity, and the motor rotor being connected to the motor housing.

According to the motor structure provided by the present application, a mounting seat is provided on an upper surface or a lower surface of the motor stator, the mounting seat is provided with a mounting hole, the motor driving circuit board is provided with a connecting hole, and the fastening mechanism is adapted to pass through the connecting hole and the mounting hole to fix the motor driving circuit board to the motor stator.

According to the motor structure provided by the present application, a positioning post is provided on an upper surface or a lower surface of the motor stator, the motor driving circuit board is provided with a connecting hole, and the positioning post is adapted to be snap-fitted into the connecting hole;

the motor shaft is provided with an annular groove, the fastening mechanism is arranged in an annular shape, and the fastening mechanism is snap-fitted into the annular groove and abuts against a side of the motor driving circuit board away from the positioning post.

According to the motor structure provided by the present application, the motor housing includes:
a first housing, rotatably sleeved on the motor shaft;
a second housing, rotatably sleeved on the motor shaft, wherein the first housing and the second housing are butted against to form the mounting cavity;
wherein the first housing and the second housing each comprise bearing mounting areas extending in opposite directions away from each other, and the bearing installation areas are adapted to install bearings, and the bearings are sleeved on the motor shaft.

According to the motor structure provided by the present application, a side of the first housing facing the second housing is provided with a stepped connecting portion, the connecting portion is provided with a shell cover extending outwardly on a side facing the second housing, and a side of the second housing facing the first housing is provided with an annular plate, the annular plate is attached to the shell cover and adapted to be fixed with a fastener;
wherein a clamping groove is formed between the annular plate and the connecting portion, and the motor rotor is snap-fitted into the clamping groove.

The present application also provides a fan lamp, including:
the motor structure as described above;
a lamp panel, sleeved on the motor shaft and mounted below the motor housing, the lamp panel being adapted to be fixed to the motor shaft by a fastener;
a lampshade, snap-fitted into the lamp panel.

According to the motor structure provided by the present application, a middle portion of the lamp panel is protruded toward the motor housing, and a mounting groove is formed, a light source driving circuit board is mounted on a groove bottom surface of the mounting groove, and a protective cover is adapted to be mounted at a notch of the mounting groove for closing the mounting groove.

According to the motor structure provided by the present application, a side of the protective cover facing the mounting groove is provided with a snap-fit post, an end of the snap-fit post is bent to form a snap fastener, the groove bottom surface of the mounting groove is provided with a connecting post, the connecting post and/or a groove wall surface of the mounting groove is formed with a snap hole, and the snap fastener is adapted to snap-fit into the snap hole.

The motor structure provided according to the present application further includes a connecting plate, sleeved on the motor shaft and located between the lamp panel and the motor housing.

The motor structure provided by the embodiment of the present application, by installing the motor driving circuit board in the motor housing, the installation space inside the motor housing is effectively utilized, the assembly times of components are reduced, the external re-planning of the installation area of the motor driving circuit board is avoided, and the aesthetics is improved and the cost is reduced. The motor housing is driven to rotate along the motor shaft by the driving assembly, and when the motor structure is used for a fan lamp, the fan can be ensured to rotate and the lamp is stationary. The motor driving circuit board is fixed to the driving assembly through a fastener, which is convenient for disassembling and assembling the motor driving circuit board.

The fan lamp provided by the embodiment of the present application can ensure that the fan rotates and the lamp is stationary by setting the above motor structure, the motor driving circuit board is installed in the motor housing, which effectively utilizes the installation space inside the motor housing, reduces assembly times of components, avoids re-planning the installation area of the motor driving circuit board externally, and improves aesthetics while reducing costs.

### BRIEF DESCRIPTION OF DRAWINGS

In order to explain the technical solutions in the present application or the prior art more clearly, the following will briefly introduce the drawings that need to be used in the description of the embodiments or the prior art. Obviously, the drawings in the following description are the present application, and other drawings can be obtained based on these drawings without exerting creative efforts for those of ordinary skill in the art.
Fig. 1 is a schematic diagram of a three-dimensional structural of a fan lamp provided by the present application;
Fig. 2 is a partial three-dimensional structural schematic diagram of the fan lamp provided by the present application;
Fig. 3 is a first cross-sectional view of the fan lamp provided by the present application;
Fig. 4 is a partial enlarged view of Fig. 3;
Fig. 5 is a second cross-sectional view of the fan lamp provided by the present application;
Fig. 6 is a partial enlarged view of Fig. 5;
Fig. 7 is a third cross-sectional view of the fan lamp provided by the present application;
Fig. 8 is a partial enlarged view of Fig. 7.

### Reference signs:

1. Motor shaft; 2. Motor housing; 3. Mounting cavity; 4. Motor driving circuit board; 5. Fastening mechanism; 6. Motor stator; 7. Motor rotor; 8. Mounting seat; 9. Positioning post; 10. First housing; 11. Second housing; 12. Bearing; 13. Connecting portion; 14. Shell cover; 15. Annular plate; 16. Lamp panel; 17. Lampshade; 18. Mounting groove; 19. Light source driving circuit board; 20. Protective cover; 21. Snap-fit post; 22. Snap fastener; 23. Connecting post; 24. Snap hole; 25. Connecting plate; 26. Connecting rod; 27. Ceiling assembly; 28. Fan blade.

### DETAILED DESCRIPTION

The embodiments of the present application will be described in further detail below with reference to the accompanying drawings and examples. The following examples are used to illustrate the present application, but are not intended to limit the scope of the present application.

**In** the description of the embodiments of the present application, it should be noted that the terms "center", "longitudinal", "horizontal", "on", "below", "front", "back", "left", "right", "vertical", "horizontal", "top", "bottom", "inside", "outside", etc. indicate the orientation or positional relationship based on the orientation or positional relationship shown in the drawings, and are only for the convenience of describing the present application embodiments and simplified descriptions, rather than indicating or implying that the device or element referred to must have a specific orientation, be constructed and operated in a specific orientation, and therefore cannot be understood as a limitation on the embodiments of the present application. Furthermore, the terms "first", "second", and "third" are used for descriptive purposes only and cannot be understood as indicating or implying relative importance.

**In** the description of the embodiments of the present application, it should be noted that, unless otherwise clearly specified and limited, the terms "connecting" and "connection" should be understood in a broad sense. For example, it can be a fixed connection or a detachable connection, or an integrated connection; it can be a mechanical connection or an electrical connection; it can be directly connected or indirectly connected through an intermediate medium. For those of ordinary skill in the art, the specific meanings of the above terms in the embodiments of the present application can be understood on a specific basis.

**In** the embodiments of the present application, unless otherwise expressly stated and limited, a first feature "on" or "below" a second feature may mean that the first and second features are in direct contact, or the first and second features are in indirect contact through an intermediate medium. Furthermore, a first feature "above", "over" and "on" a second feature may mean that the first feature is directly above or diagonally above the second feature, or simply means that the first feature is horizontally higher than the second feature. The first feature "below", " beneath " and "under" the second feature may mean that the first feature is directly below or diagonally below the second feature, or simply mean that the horizontal height of the first feature is smaller than the second feature.

In the description of this specification, reference to the description of the terms "one embodiment," "some embodiments," "an example," "a specific example," or "some examples," etc. means that the specific features, structures, materials or characteristics described in connection with the embodiment or example are included in at least one embodiment or example of the embodiments of the present application. In this specification, schematic representations of the above terms do not necessarily refer to the same embodiment or example. Furthermore, the specific features, structures, materials or characteristics described may be combined in any one or more embodiments or examples in a suitable manner. In addition, those skilled in the art can combine and assemble the different embodiments or examples described in this specification, as well as the features of different embodiments or examples.

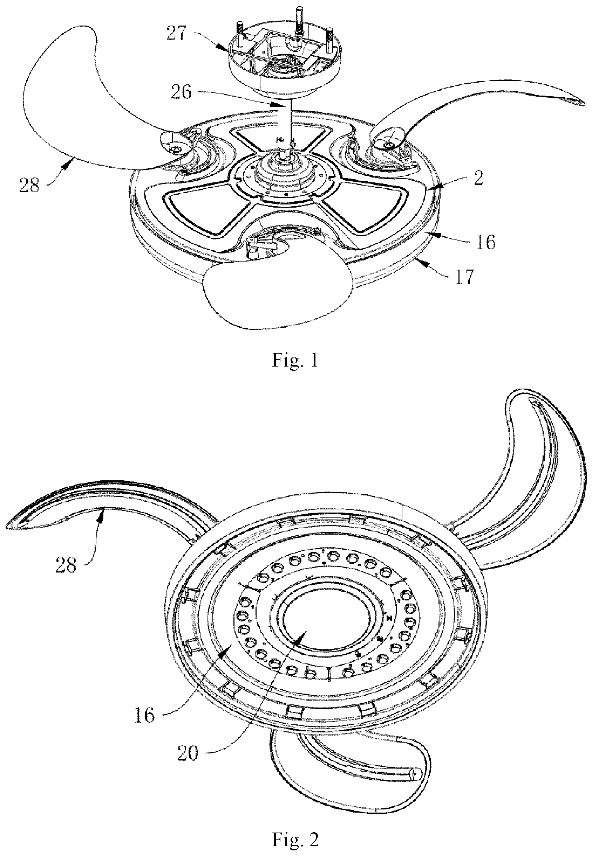

Embodiments of the present application are described below with reference to Figs. 1-8.

As shown in Figs. 1 to 8, embodiments of the present application provide a motor structure, which mainly includes a motor shaft 1, a motor housing 2, a driving assembly and a motor driving circuit board 4. The motor housing 2 is rotatably sleeved on the motor shaft 1, and a mounting cavity 3 is formed inside the motor housing 2. The driving assembly is sleeved on the motor shaft 1 and installed in the mounting cavity 3 to drive the motor housing 2 to rotate along the motor shaft 1. The motor driving circuit board 4 is sleeved on the motor shaft 1 and installed in the mounting cavity 3. The motor driving circuit board 4 is electrically connected to the driving assembly, and the motor driving circuit board 4 is adapted to be fixed to the driving assembly through a fastener.

In this embodiment, by installing the motor driving circuit board 4 in the motor housing 2, the installation space inside the motor housing 2 is effectively utilized, the assembly times of components are reduced, the installation area of the motor driving circuit board 4 is avoided from being re-planned outside, and the aesthetics is improved and the cost is reduced. The driving assembly is used to drive the motor housing 2 to rotate along the motor shaft 1. When the motor structure is used for a fan lamp, it can ensure that the fan rotates and the lamp is stationary. The motor driving circuit board 4 is fixed to the driving assembly through the fastener to facilitate disassembly and assembly of the motor driving circuit board 4.

By using the built-in the motor driving circuit board 4, it is avoided that the motor driving circuit board 4 is installed outside the motor to occupy the space of the fan lamp and affect the appearance of the fan lamp. It can effectively utilize space while reducing the number of assembly times and the number of components, and reduce the cost.

Because the motor driving circuit board 4 is built into the motor housing 2, and the motor housing 2 is of a sealed design, there is no need to consider the dustproof problem of the motor driving circuit board 4, and there is no need to design a dustproof structure, making the overall structure of the motor structure simpler and more convenient to assemble.

The motor shaft 1 is a fixedly arranged shaft, and the motor shaft 1 itself does not rotate and is used to connect the driving assembly. The interior of the motor shaft 1 is hollow to facilitate routing of wires from the interior of the motor shaft 1. A clearance hole is provided on the motor shaft 1, so that after the cable is inserted into the motor shaft 1, it can pass through the clearance hole and be connected to the motor driving circuit board 4.

After power is supplied to the motor driving circuit board 4 through the cable, the motor driving circuit board 4 supplies power to the driving assembly, and the driving assembly can drive the motor housing 2 to rotate around the motor shaft 1, so as to be suitable for use in fan lamps.

As shown in Fig. 1, an upper end of the motor shaft 1 passes through the motor housing 2 and is connected to a connecting rod 26. An upper end of the connecting rod 26 is provided with a ceiling assembly 27. Through the ceiling assembly 27, the entire motor structure and fan lamp are fixed to the roof.

According to the motor structure provided by the present application, the driving assembly includes a motor stator 6 and a motor rotor 7. The motor stator 6 is sleeved on the motor shaft 1 and installed in the mounting cavity 3. The motor stator 6 is electrically connected to the motor driving circuit board 4, and the motor driving circuit board 4 is adapted to be fixed to the motor stator 6 through the fastener. The motor rotor 7 is sleeved on the outside of the motor stator 6 and installed in the mounting cavity 3, and the motor rotor 7 is connected to the motor housing 2.

The motor stator 6 is a coil winding, and the motor rotor 7 has a magnet. After the motor driving circuit board 4 supplies power to the motor stator 6, it can drive the motor rotor 7 to rotate around the motor stator 6, thereby driving the motor housing 2 to rotate.

The motor driving circuit board 4 is fixed to the motor stator 6 through the fastener to fix the position of the motor driving circuit board 4 and prevent the motor driving circuit board 4 from rotating.

**In** one embodiment of the present application, the motor driving circuit board 4 is installed on an upper surface of the motor stator 6.

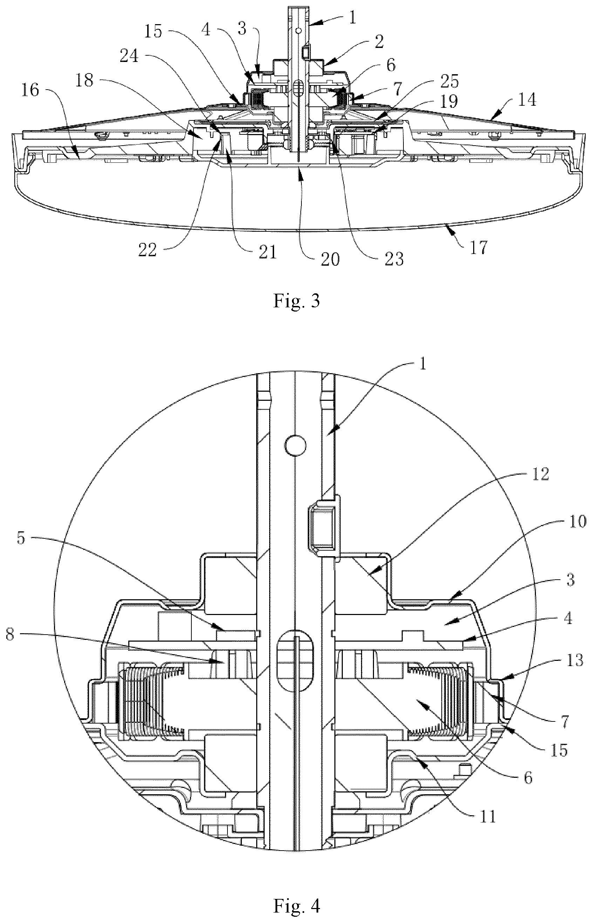

As shown in Figs. 3 and 4, a mounting seat 8 can be provided on the upper surface of the motor stator 6, and a mounting hole can be formed on the upper surface of the mounting seat 8. At the same time, a connecting hole can be opened in the motor driving circuit board 4, and the fastening mechanism 5 is adapted to pass through the connecting hole and the mounting hole to fix the motor driving circuit board 4 to the upper surface of the motor stator 6. The fastening mechanism 5 can be a screw, internal threads are provided on the inner surfaces of the connecting hole and the mounting hole, and the screw is screwed into the connecting hole and the mounting hole in order to fix the motor driving circuit board 4 on the upper surface of the motor stator 6. The fastening mechanism 5 can also use a rivet, etc., which is sequentially riveted to the connecting hole and the mounting hole to fix the motor driving circuit board 4 to the upper surface of the motor stator 6.

A plurality of mounting seats 8 can be provided on the upper surface of the motor stator 6, and are arranged at circumferential intervals with the motor shaft 1 as the center. Correspondingly, a plurality of connecting holes are also provided in the motor driving circuit board 4, and the plurality of connecting holes correspond to the positions of the mounting holes of the plurality of mounting seats 8, and the connecting holes are misaligned with the electrical components on the motor driving circuit board 4.

By providing the mounting seat 8 on the upper surface of the motor stator 6 and opening mounting holes to connect the motor driving circuit board 4, screws can be prevented from penetrating into the inside of the motor stator 6 and affecting the performance of the motor stator 6.

Among them, the mounting seat 8 is made of insulating material such as plastic to insulate the upper surface of the motor stator 6 and the motor driving circuit board 4.

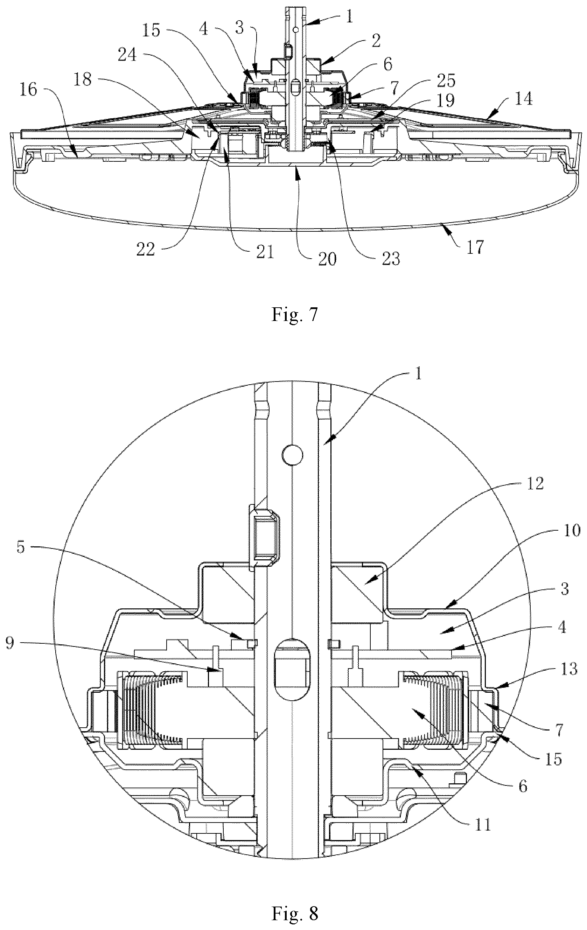

As shown in Figs. 7 and 8, a positioning post 9 can also be provided on the upper surface of the motor stator 6, and the connecting hole can be provided in the motor driving circuit board 4, and the positioning post 9 is adapted to be snap-fitted into the connecting holes. At the same time, the motor shaft 1 is provided with an annular groove. After the motor stator 6 and the motor driving circuit board 4 are installed on the motor shaft 1, the lower groove surface of the annular groove is flush with the upper surface of the motor driving circuit board 4, and the fastening mechanism is 5 is arranged in an annular shape, and the annular fastening mechanism 5 is snap-fitted into the annular groove and abuts against a side of the motor driving circuit board 4 away from the positioning post 9, that is, the fastening mechanism 5 abuts against the upper surface of the motor driving circuit board 4, so that the annular fastening mechanism 5 cooperates with the positioning post 9 and the connecting hole to fix the motor driving circuit board 4 to the upper surface of the motor stator 6. Exemplarily, the fastening mechanism 5 is an annular circlip.

A plurality of positioning posts 9 can be provided on the upper surface of the motor stator 6, and are arranged at circumferential intervals with the motor shaft 1 as the center. Correspondingly, a plurality of connecting holes are also provided on the motor driving circuit board 4, and the plurality of connecting holes are correspond to the positions of the plurality of positioning posts 9, and the connecting holes are offset from the electrical components on the motor driving circuit board 4.

Among them, the positioning post 9 is made of insulating material such as plastic to insulate the upper surface of the motor stator 6 and the motor driving circuit board 4.

In another embodiment of the present application, the motor driving circuit board 4 is mounted on the lower surface of the motor stator 6.

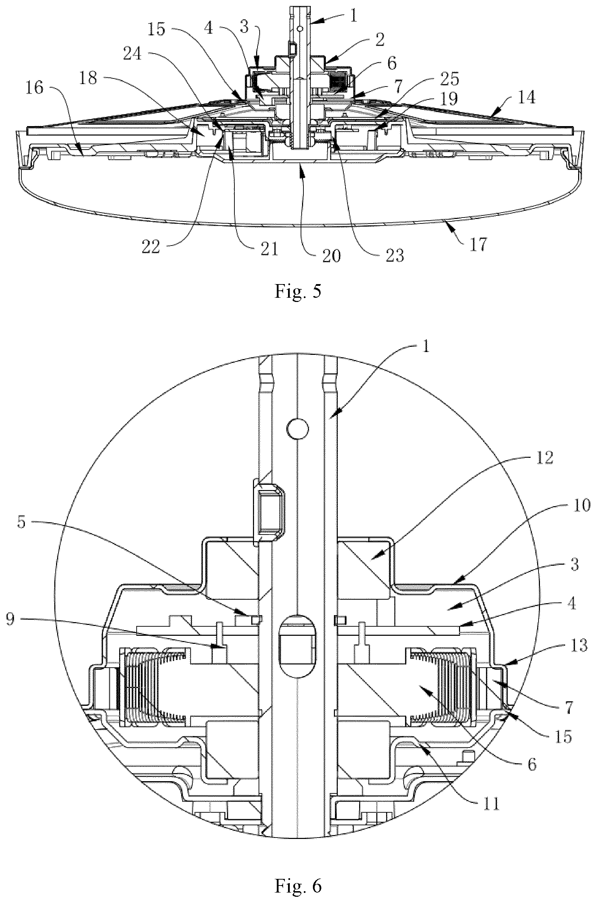

As shown in Figs. 5 and 6, a mounting seat 8 can be provided on the lower surface of the motor stator 6, and a mounting hole can be formed on the lower surface of the mounting seat 8. At the same time, a connecting hole can be opened in the motor driving circuit board 4, and the fastening mechanism 5 is adapted to pass through the connecting hole and the mounting hole to fix the motor driving circuit board 4 to the lower surface of the motor stator 6. The fastening mechanism 5 can be a screw, internal threads are provided on the inner surfaces of the connecting hole and the mounting hole, and the screw is screwed into the connecting hole and the mounting hole in turn to fix the motor driving circuit board 4 on the lower surface of the motor stator 6. The fastening mechanism 5 can also use a rivet, etc., which is sequentially riveted to the connecting hole and the mounting hole to fix the motor driving circuit board 4 to the lower surface of the motor stator 6.

A plurality of mounting seats 8 can be provided on the lower surface of the motor stator 6, and are arranged at circumferential intervals with the motor shaft 1 as the center. Correspondingly, plurality of connecting holes are also provided on the motor driving circuit board 4, and the plurality of connecting holes correspond to the positions of the mounting holes of the plurality of mounting seats 8, and the connecting holes are misaligned with the electrical components on the motor driving circuit board 4.

By providing the mounting seat 8 on the lower surface of the motor stator 6 and opening mounting holes to connect the motor driving circuit board 4, screws can be prevented from penetrating into the inside of the motor stator 6 and affecting the performance of the motor stator 6.

Among them, the mounting seat 8 is made of insulating material such as plastic to insulate the lower surface of the motor stator 6 and the motor driving circuit board 4.

Positioning posts 9 can also be provided on the lower surface of the motor stator 6, and connecting holes can be provided on the motor driving circuit board 4, and the positioning posts 9 are adapted to be snap-fitted into the connecting holes. At the same time, an annular groove is provided on the motor shaft 1. After the motor stator 6 and the motor driving circuit board 4 are installed on the motor shaft 1, an upper groove surface of the annular groove is flush with the lower surface of the motor driving circuit board 4, and the fastening mechanism 5 is arranged in an annular shape, and the annular fastening mechanism 5 is snap-fitted into the annular groove and abuts against the side of the motor driving circuit board 4 away from the positioning post 9, that is, the fastening mechanism 5 abuts against the lower surface of the motor driving circuit board 4, so that the annular fastening mechanism 5 cooperates with the positioning post 9 and the connecting hole to fix the motor driving circuit board 4 to the lower surface of the motor stator 6. Exemplarily, the fastening mechanism 5 is an annular circlip.

A plurality of positioning posts 9 can be provided on the lower surface of the motor stator 6, and are arranged at circumferential intervals with the motor shaft 1 as the center. Correspondingly, a plurality of connecting holes are also provided on the motor driving circuit board 4, and the plurality of connecting holes correspond to the positions the plurality of positioning posts 9, and the connecting holes are offset from the electrical components on the motor driving circuit board 4.

Among them, the positioning post 9 is made of insulating material such as plastic to insulate the lower surface of the motor stator 6 and the motor driving circuit board 4.

As shown in Fig. 3, the motor housing 2 includes a first housing 10 and a second housing 11, the first housing 10 is rotationally sleeved on the motor shaft 1, the second housing 11 is rotationally sleeved on the motor shaft 1, and the first housing 10 is rotationally sleeved on the motor shaft 1. The first housing 10 and the second housing 11 are butted against to form the aforementioned mounting cavity 3. The first housing 10 and the second housing 11 each include bearing mounting areas extending in opposite directions away from each other, and the bearing mounting areas are adapted to install bearings 12, and the bearings 12 are sleeved on the motor shaft 1.

By forming a bearing installation area to install the bearing 12, the bearing 12 is a deep groove ball bearing, an inner ring of the bearing 12 is sleeved on the motor shaft 1, and the two can adopt an interference fit or a transition fit, and an outer ring of the bearing 12 is connected to the first housing 10 and the second housing 11 respectively, and the two can adopt an interference fit or a transition fit, and the bearings 12 are used to realize the rotational installation between the first housing 10 and the motor shaft 1, and the second housing 11 and the motor shaft 1. Among them, the first housing 10 and the second housing 11 are butted by riveting.

As shown in Fig. 1, a fan blade 28 is rotatably installed on an upper surface of the shell cover 14. An arc-shaped adjustment groove is also provided on the upper surface of the shell cover 14. The fan blade 28 is slidably connected to the arc-shaped adjustment groove through a connecting piece. After sliding along the arc-shaped adjustment groove, the fan blade 28 can be stored as a whole above the shell cover 14, thereby facilitating transportation and aesthetics when the fan lamp is only used as a lighting fixture. Among them, the lower surface of the fan blade 28 is provided with reinforcing ribs for structural reinforcement of the fan blade 28.

According to the motor structure provided by the embodiment of the present application, the first housing 10 is provided with a stepped connecting portion 13 on the side facing the second housing 11, and the connecting portion 13 includes a shell cover 14 extending outwardly on a side facing the second housing 11. An annular plate 15 is provided on a side of the second housing 11 facing the first housing 10, and the annular plate 15 is attached to the shell cover 14 and adapted to be fixed with a fastener. Among them, a clamping groove is formed between the annular plate 15 and the connecting portion 13, and the motor rotor 7 is snap-fitted into the clamping groove.

The motor rotor 7 is fixed between the stepped connecting portion 13 and the annular plate 15 of the second housing 11 to ensure reliable fixation of the motor rotor 7 and connect the motor rotor 7 to the first housing 10 and the second housing 11 which can drive the first housing 10 and the second housing 11 to rotate when the motor rotor 7 rotates.

On the other hand, the present application also provides a fan lamp, including a light panel 16, a lampshade 17 and the motor structure in the previous embodiment. Among them, the lamp panel 16 is sleeved on the motor shaft 1 and installed below the motor housing 2. The lamp panel 16 is adapted to be fixed to the motor shaft 1 by a fastener, and the lampshade 17 is snap-fitted into the lamp panel 16.

By applying the above motor structure to the fan lamp, the motor driving circuit board 4 supplies power to the motor stator 6 and can cause the motor rotor 7 to rotate, thereby driving the first housing 10 and the second housing 11 to rotate, so that the fan blades 28 rotate, and at this time, the motor shaft 1 remains fixed to prevent the light panel 16 from rotating.

In this embodiment, the middle portion of the lamp panel 16 protrudes toward the motor housing 2 to form a mounting groove 18. A light source driving circuit board 19 is installed on a groove bottom surface of the mounting groove 18. A protective cover 20 is adapted to be mounted at a notch of the mounting groove 18 for closing the mounting groove 18. The lamp panel 16 is also provided with a plurality of lamp beads, and the plurality of lamp beads are arranged at circumferential intervals around the center of the mounting groove 18 in a circle. Among them, the light source driving circuit board 19 is electrically connected to the lamp beads.

The light source driving circuit board 19 is accommodated through the mounting groove 18 formed in the middle portion of the lamp panel 16, and is protected by the protective cover 20. When the lampshade 17 is removed to clean or inspect the lamp panel 16, the light source driving circuit board 19 can be prevented from being exposed, and the safety can be improved.

Among them, a side of the protective cover 20 facing the mounting groove 18 is provided with a snap-fit post 21, an end of the snap-fit post 21 is bent to form a snap fastener 22, and a bottom surface of the mounting groove 18 is provided with a connecting post 23, and the connecting post 23 and/or a groove wall surface of the mounting groove 18 is formed with a snap hole 24, and the snap fastener 22 is adapted to snap-fit into the snap hole 24. So as to install the protective cover 20 through snap-fitting.

**In** order to ensure that the protective cover 20 seals the mounting groove 18, the edge of the protective cover 20 facing the mounting groove 18 is provided with a flange, and the flange is in contact with the groove wall surface of the mounting groove 18.

An external thread can also be provided on the outer surface of the flange, and an internal thread can be provided on the groove wall surface of the mounting groove 18, and the internal thread matches the external thread, so that the protective cover 20 is installed in the mounting groove 18 by threaded connection. At this time, there is no need to provide the snap-fit post 21 on the protective cover 20, and there is no need to provide the connecting post 23 in the mounting groove 18.

As shown in Fig. 3, the fan lamp according to the embodiment of the present application also includes a connecting plate 25, which is sleeved on the motor shaft 1 and located between the lamp panel 16 and the motor housing 2. When the lamp panel 16 is installed on the motor shaft 1, since the lamp panel 16 is made of plastic material, a connecting plate 25 is provided above it to strengthen the structure. At the same time, a backing plate can also be provided in the mounting groove 18. It is also fixed on the motor shaft 1 through nuts and can also have a structural reinforcement effect.

Finally, it should be noted that: the above embodiments are only used to illustrate the technical solution of the present application, but not to limit it. Although the present application has been described in detail with reference to the foregoing embodiments, those of ordinary skill in the art should understand that they can still modify the technical solutions described in the foregoing embodiments, or make equivalent replacements for some of the technical features; However, these modifications or substitutions do not cause the essence of the corresponding technical solution to deviate from the scope of the technical solution of each embodiment of the present application.

## Claims

1. A motor structure, comprising:
a motor shaft;
a motor housing, rotatably sleeved on the motor shaft, and a mounting cavity being formed in the motor housing;
a driving assembly, sleeved on the motor shaft and installed in the mounting cavity for driving the motor housing to rotate along the motor shaft;
a motor driving circuit board, sleeved on the motor shaft and installed in the mounting cavity, wherein the motor driving circuit board is electrically connected to the driving assembly, and the motor driving circuit board is adapted to be fixed to the driving assembly through a fastening mechanism.

2. The motor structure according to claim 1, wherein the driving assembly comprises:
a motor stator, sleeved on the motor shaft and installed in the mounting cavity, the motor stator being electrically connected to the motor driving circuit board, and the motor driving circuit board being adapted to be fixed to the motor stator through the fastening mechanism;
a motor rotor, rotatably sleeved on an outside of the motor stator and installed in the mounting cavity, and the motor rotor being connected to the motor housing.

3. The motor structure according to claim 2, wherein a mounting seat is provided on an upper surface or a lower surface of the motor stator, the mounting seat is provided with a mounting hole, the motor driving circuit board is provided with a connecting hole, and the fastening mechanism is adapted to pass through the connecting hole and the mounting hole to fix the motor driving circuit board to the motor stator.

4. The motor structure according to claim 2, wherein a positioning post is provided on an upper surface or a lower surface of the motor stator, the motor driving circuit board is provided with a connecting hole, and the positioning post is adapted to be snap-fitted into the connecting hole;
the motor shaft is provided with an annular groove, the fastening mechanism is arranged in an annular shape, and the fastening mechanism is snap-fitted into the annular groove and abuts against a side of the motor driving circuit board away from the positioning post.

5. The motor structure according to any one of claims 2 to 4, wherein the motor housing comprises:
a first housing, rotatably sleeved on the motor shaft;
a second housing, rotatably sleeved on the motor shaft, wherein the first housing and the second housing are butted against to form the mounting cavity;
wherein the first housing and the second housing each comprise bearing mounting areas extending in opposite directions away from each other, and the bearing installation areas are adapted to install bearings, and the bearings are sleeved on the motor shaft.

6. The motor structure according to claim 5, wherein a side of the first housing facing the second housing is provided with a stepped connecting portion, the connecting portion is provided with a shell cover extending outwardly on a side facing the second housing, and a side of the second housing facing the first housing is provided with an annular plate, the annular plate is attached to the shell cover and adapted to be fixed with a fastener;
wherein a clamping groove is formed between the annular plate and the connecting portion, and the motor rotor is snap-fitted into the clamping groove.

7. A fan lamp, comprising:
the motor structure as claimed in any one of claims 1 to 6;
a lamp panel, sleeved on the motor shaft and mounted below the motor housing, the lamp panel being adapted to be fixed to the motor shaft by a fastener;
a lampshade, snap-fitted into the lamp panel.

8. The fan lamp according to claim 7, wherein a middle portion of the lamp panel is protruded toward the motor housing, and a mounting groove is formed, a light source driving circuit board is mounted on a groove bottom surface of the mounting groove, and a protective cover is adapted to be mounted at a notch of the mounting groove for closing the mounting groove.

9. The fan lamp according to claim 8, wherein a side of the protective cover facing the mounting groove is provided with a snap-fit post, an end of the snap-fit post is bent to form a snap fastener, the groove bottom surface of the mounting groove is provided with a connecting post, the connecting post and/or a groove wall surface of the mounting groove is formed with a snap hole, and the snap fastener is adapted to snap-fit into the snap hole.

10. The fan lamp according to any one of claims 7 to 9, further comprising a connecting plate, sleeved on the motor shaft and located between the lamp panel and the motor housing.
